Europäisches Patentamt

(19) European Patent Office

Office européen des brevets

(11) **EP 0 951 090 A2**

(12) **EUROPEAN PATENT APPLICATION**

(43) Date of publication:
20.10.1999 Bulletin 1999/42

(51) Int. Cl.⁶: **H01Q 3/26**, G07B 15/00, G01S 13/02

(21) Application number: 99107565.6

(22) Date of filing: 15.04.1999

(84) Designated Contracting States:
AT BE CH CY DE DK ES FI FR GB GR IE IT LI LU
MC NL PT SE
Designated Extension States:
AL LT LV MK RO SI

(30) Priority: 16.04.1998 JP 10654398

(71) Applicant: **JAPAN RADIO CO., LTD**
Mitaka-shi, Tokyo 181-8510 (JP)

(72) Inventor:
**Yoshida, Goro**
c/o Japan Radio Co., Ltd.
Mitaka-shi, Tokyo 181-8510 (JP)

(74) Representative:
**Tiedtke, Harro, Dipl.-Ing. et al**
Patentanwaltsbüro
Tiedtke-Bühling-Kinne & Partner
Bavariaring 4
80336 München (DE)

(54) **Antenna apparatus**

(57)     An uplink transceiver circuit (16) of an in-vehicle transponder (12) is configured using a modulator (24) having reciprocal characteristics. A continuous wave received by an element antenna (26) is modulated by the reciprocal modulator (24) and re-radiated from an element antenna (28). Conversely, a continuous wave received by the element antenna (28) is modulated by the reciprocal modulator (24) and re-radiated from the element antenna (26). The signals re-radiated from these element antennas (26, 28) are an in-phase combination in the direction of the incoming continuous wave so that the directivity for transmission narrows and the gain increases. For the reception of the continuous wave, a broad receiving directivity, which each element antenna (26, 28) individually provides, can be realized.

Fig. 1

**Description**

BACKGROUND OF THE INVENTION

FIELD OF THE INVENTION

The present invention relates to a passive transponder for use in Electronic Toll Collection Systems and the like, and more particularly to an antenna apparatus that can be used as an in-vehicle uplink transceiver circuit.

DESCRIPTION OF THE RELATED ART

An Electronic Toll System (ETC) exchanges radio signals between vehicles traveling on a road and a roadside facility so that the facility can charge each vehicle or driver with an appropriate toll, provide each vehicle with road traffic information, and detect vehicles that have not properly paid the toll. Radio signals in this system are generally sent in the microwave band. For the apparatus for the transmission and reception of the radio signals, an interrogator is disposed along the roadside (such as on a bridge structure extending over the road) and a transponder is carried in each vehicle (refer to Japanese Patent Laid-Open Publication No. Hei 9-98106). In the basic communication procedure, the interrogator performs indiscriminate acquisition toward the road and the transponder responds to this acquisition when entering the cover area of the interrogator.

Because the transponder in this system is carried in vehicles, compact size, low power consumption, and low cost are desirable to make the product suitable for the market. For example, it is desirable to implement the transponder in the form of an RF-IC card, which houses the bulk of the RF (radio frequency) circuitry. The utilization of transponders is a well-known art in the field of radio repeater systems and radar beacon systems and the transponder may be an active type, which amplifies or converts in frequency the received signal and reradiates it, or a passive type, which re-radiates the signal without amplification or frequency conversion. The active type of transponder is being considered for use in ETCs in Japan while the passive type having a simple circuit configuration, low power consumption, and low cost are being used in ETCs in other Asian countries and in Europe.

However, there are several problems associated with use of a passive transponder in Europe, one being that the interrogator may not be able to receive a response at a sufficient strength since the received signal is re-radiated without amplification by the transponder. To resolve this problem, it is sufficient to increase the gain of the transponder, but, to increase gain with a passive transponder, it is necessary to raise the gain of its antenna and, to raise the gain of the antenna, a plurality of element antennas may be arrayed and the signals at the element antennas may be combined so as to narrow the directivity of the antenna (array antenna). However, in this method, the transmitting directivity and receiving directivity both become narrow so as to impair the broad receiving directivity, in which the directivity during reception is sufficiently broad.

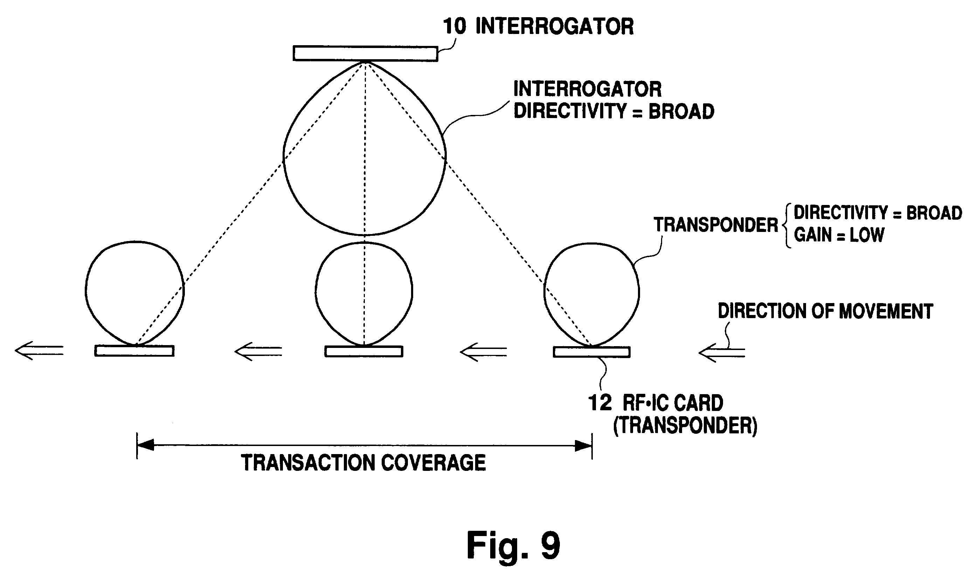

An in-vehicle transponder ideally should be able to respond to an incoming acquisition from any direction. As shown in Fig. 9, when a moving transponder 12 enters the cover area of an interrogator 10, it is necessary for the directivity (beam width) of the interrogator 10 to be broad and for the transponder 12 to have a sufficiently broad receiving directivity so as to sufficiently broaden the "transaction coverage", namely, the range in which the transponder 12 can respond to the acquisition from the interrogator 10 and in which the interrogator 10 can receive this response at a sufficient strength. However, when an antenna having narrow directivity and high antenna gain, such as an array antenna, is used in the transponder 12, the transaction coverage is narrowed.

SUMMARY OF THE INVENTION

It is an object of the present invention to realize a compact size, and low cost passive transponder having the same broad directivity during reception as the known art, but having a higher antenna gain during transmission.

In order to achieve this object, in the present invention are provided a predetermined number of modulators each having a first terminal and a second terminal, a predetermined number of first antennas provided to correspond with each modulator and connected to the first terminal of corresponding modulators, and a predetermined number of second antennas provided to correspond with each modulator and connected to the second terminal of corresponding modulators. Furthermore, in the present invention, each modulator is a reciprocal modulator that simultaneously executes with identical delay times an operation to perform modulation on a signal input from the first terminal and to output it from the second terminal and an operation to perform modulation on a signal input from the second terminal and to output it from the first terminal.

By using the reciprocal modulator in this manner, in the present invention, the first transponder circuit from the first element antenna to the second element antenna via the modulator and the second transponder circuit from the second element antenna to the first element antenna via the modulator can be realized with a simple circuit configuration of two element antennas and one modulator. The receiving directivity of the first and second transponder circuits is established by the directivity of the first element antenna and the second element antenna, respectively, so that the receiving directivity is at least as broad as that of previous single transponders. At the same time, the transmitting directivity of the first and second transponder circuits becomes narrow and the gain rises compared to those systems. This is possible because the re-radiated radio signal via the first transponder circuit and the reradiated radio signal via the second transponder circuit are both signals that are received, modulated, and re-radiated via the same signal path (in opposite directions) of first element antenna, modulator, and second element antenna, and are reradiated in a narrow beam width at high gain in the direction of the incoming signal from the interrogator. Therefore, in the present invention, it is possible to realize a compact size and low cost passive transponder having a broad receiving directivity equivalent to that of known systems, but having a higher antenna gain during transmission.

Although one set of modulator, first element antenna, and second element antenna may be used in realizing the antenna apparatus related to the present invention, providing a plurality of sets can be used to further improve characteristics. For example, regardless of whether they are in identical or different sets, all of a plurality of first and second element antennas are positioned on a common, predetermined line. With such an arrangement, it is possible to further narrow the directivity for transmission and to further increase the gain. Furthermore, if the antenna arrangement line connecting the positions of the first and second element antennas that form the first set, the antenna arrangement line connecting the positions of the first and second element antennas that form the second set, ..., and the antenna arrangement line connecting the positions of the first and second element antennas that form the last set are different lines all belong to a common plane, the effects of the above-mentioned broad receiving directivity and the narrow transmitting directivity can be extended in two dimensions.

Furthermore, the present invention can be understood to be not only an antenna apparatus but also a transponder. Namely, the transponder related to the present invention is an in-vehicle transponder having a downlink receiver circuit for receiving the acquisition sent by radio transmission from the fixed position interrogator, an in-vehicle uplink transceiver circuit for receiving a continuous wave sent by radio transmission from the interrogator and performing modulation on and transmitting the continuous wave, and a signal processing section for supplying a modulating signal for the above-mentioned modulation to the in-vehicle uplink transceiver circuit necessary for responding to the acquisition received from the downlink receiver circuit. The transponder is of the passive type, in which the in-vehicle uplink transceiver circuit does not perform amplification and frequency conversion, wherein the in-vehicle uplink transceiver circuit is an antenna apparatus of the present invention.

BRIEF DESCRIPTION OF THE DRAWINGS

Fig. 1 is a block diagram showing a configuration of a transponder related to a first embodiment of the present invention.
Figs. 2A, 2B, and 2C respectively show functions of an uplink transceiver circuit in the first embodiment.
Fig. 3 illustrates the principle of in-phase combination in the first embodiment.
Fig. 4 shows broad receiving directivity in the first embodiment.
Fig. 5 shows narrow transmitting directivity at high gain in the first embodiment.
Fig. 6 illustrates a relationship between the transponder and an interrogator in the first embodiment.
Fig. 7 shows a configuration of the transponder in a second embodiment of the present invention.
Fig. 8 shows a configuration of the transponder in a third embodiment of the present invention.
Fig. 9 illustrates a relationship between a prior art transponder and interrogator.

DETAILED DESCRIPTION OT THE PREFERRED EMBODIMENTS

Preferred embodiments of the present invention are described hereinafter with reference to the drawings. Components corresponding to those already described with reference to Fig. 9 are assigned identical reference numerals and their descriptions are not repeated.

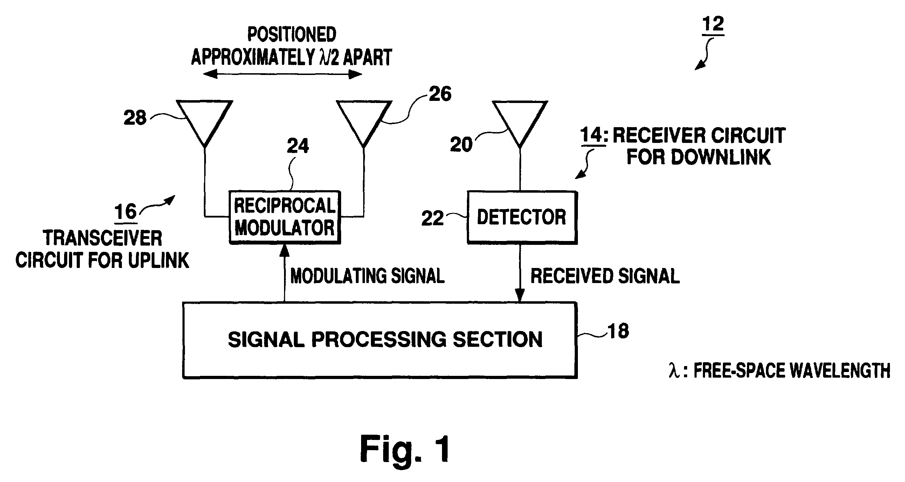

Fig. 1 shows the configuration of an in-vehicle transponder 12 related to a first embodiment of the present invention. The transponder 12 shown in this figure has a downlink receiver circuit 14, an in-vehicle uplink transceiver circuit 16, and a signal processing section 18. The downlink receiver circuit 14 has an element antenna 20 for receiving signals regarding acquisition that is transmitted from the interrogator 10 and a detector 22 for detecting the signal that is received from the element antenna 20 and supplying it to the signal processing section 18. The signal processing section 18, upon receiving the acquisition from the interrogator 10 by the downlink receiver circuit 14, responds by generating a modulating signal and supplies it to a reciprocal modulator 24 within the uplink transceiver circuit 16.

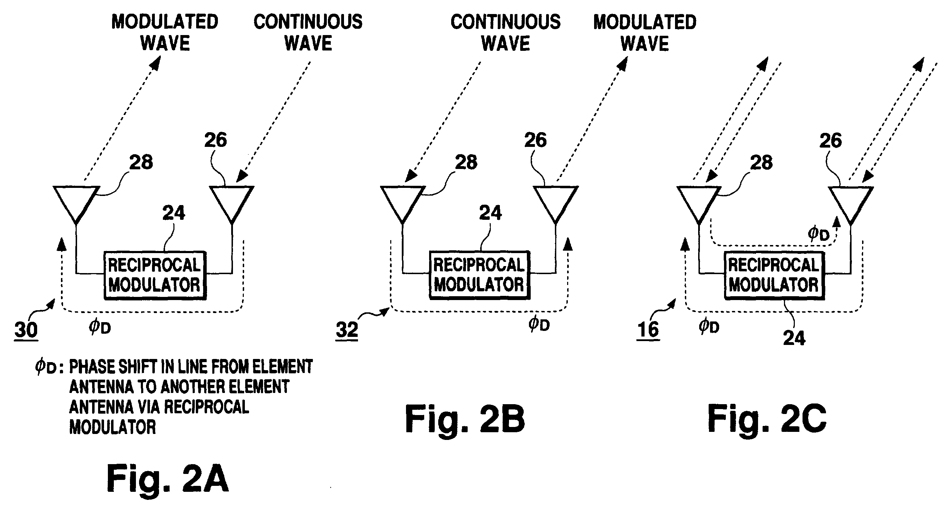

The uplink transceiver circuit 16 comprises, in addition to the reciprocal modulator 24, element antennas 26 and 28. The interrogator 10 transmits a continuous signal so that the transponder 12, which receives the acquisition, can respond to this acquisition. The element antennas 26 and 28 both receive this continuous wave and supply it to the reciprocal modulator 24. The reciprocal modulator 24 applies a predetermined modulation process, such as phase modulation or amplitude modulation, based on the modulating signal from the signal processing section 18, on the continuous wave that was received from the element antenna 26 and re-radiates it from the element antenna 28. The reciprocal modulator 24 applies modulation, based on the modulating signal, also on the continuous wave that was received from the element antenna 28 and re-radiates it from the element antenna 26. Therefore, in this embodiment, a first transponder circuit 30 (refer to Fig. 2A) from the element antenna 26 to the element antenna 28 via the reciprocal modulator 24, and a second transponder circuit 32 (refer to Fig. 2B) from the element antenna 28 to the element antenna 26 via the reciprocal modulator 24 are realized with a single reciprocal modulator 24 and element antennas 26 and 28 to realize a compact unit (refer to Fig. 2C).

The reciprocal modulator 24 comprises a passive device and a device such as a pin diode, the characteristic of which is reciprocal. Namely, modulation is performed with identical characteristics for the signal relating to the first transponder circuit 30 and for the signal relating to the second transponder circuit 32. Therefore, as shown in Figs. 2A to 2C, the phase shift in the signal transmission path from the element antenna 26 to the element antenna 28 via the reciprocal modulator 24, and the phase shift in the signal path from the element antenna 28 to the element antenna 26 via the reciprocal modulator 24 are identical, both being $\phi D$.

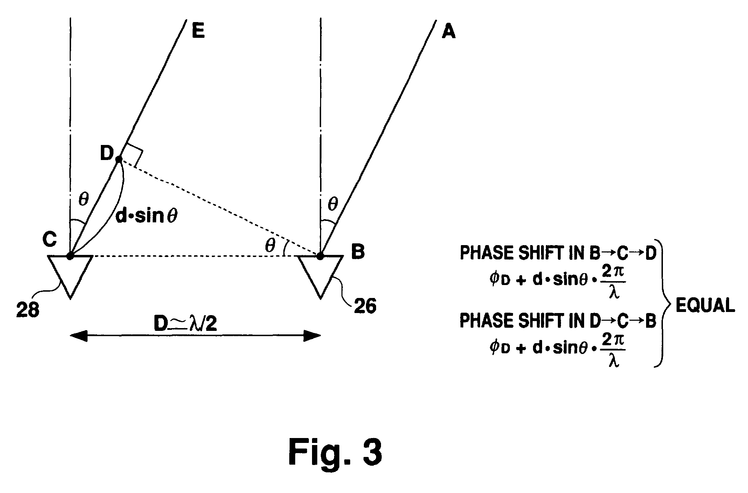

Furthermore, it is assumed that the continuous wave from the interrogator 10 is arriving from a certain direction $\theta$ (refer to Fig. 3). At this time, modulation by the reciprocal modulator 24 is performed on the continuous wave that was received from the element antenna 26 and the modulated signal is re-radiated from the element antenna 28. A line BD in Fig. 3 connects the points where the phases are identical for the signal received by the element antenna 26 and the signal reradiated by the element antenna 28. In the same figure, A and E represent the directions of the incoming and re-radiated signals, B represents the radiating point of the element antenna 26, and C represents the radiating point of the element antenna 28. The distance from point C to point D can be expressed as $d \cdot \sin\theta$. Here, d represents the spacing between the element antenna 26 and the element antenna 28, and in this figure, is approximately 1/2 times the free-space wavelength $\lambda$ of the signal from the interrogator 10. The signal received by the element antenna 28 from the interrogator 10, although opposite in direction, also passes the interval CD of length $d \cdot \sin\theta$. Therefore, the signal that is re-radiated by the element antenna 26 and the signal that is re-radiated by the element antenna 28 intensify each other (in-phase combination) in the directions A and E in Fig. 3 so that, as compared to individual signals, the gain increases by 6 dB.

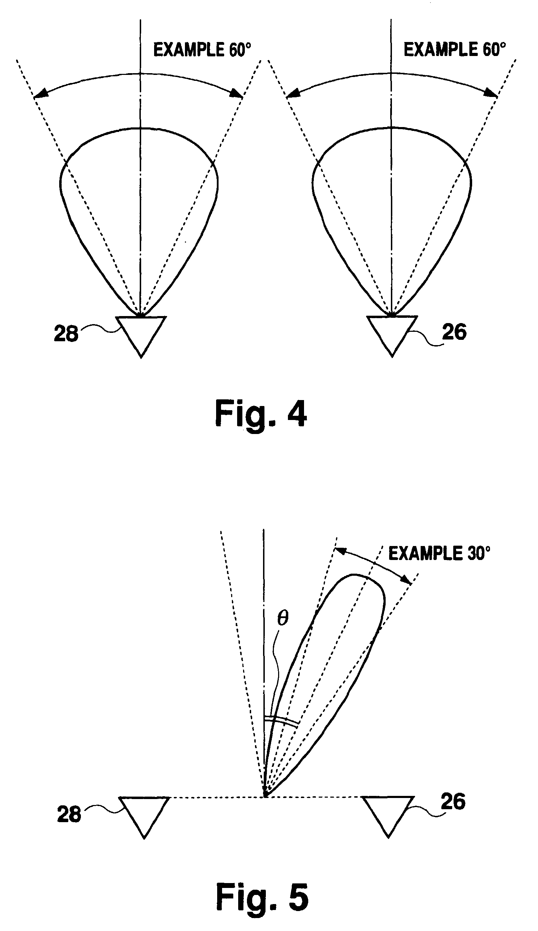

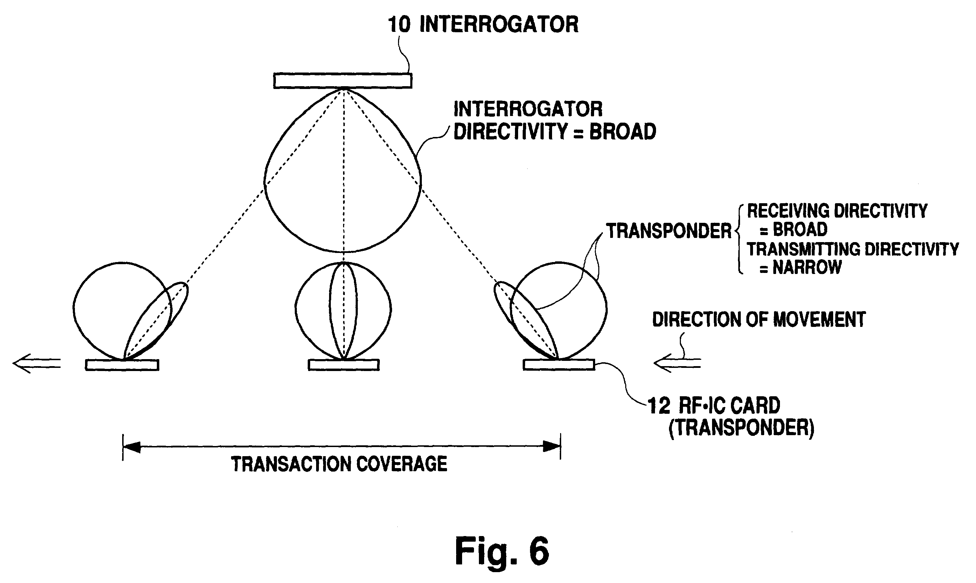

Therefore, according to this embodiment, while a broad receiving directivity similar to using the element antenna 26 and 28 individually can be realized (refer to Fig. 4), a high gain and narrow directivity at least equivalent to an array antenna can be realized (refer to Fig. 5) for the transmission of signals. Therefore, as shown in Fig. 6, broadening the transaction coverage and improving the transmission-related antenna gain can be simultaneously realized. Alternatively, it is possible to configure the transponder using a so-called phased array antenna and to receive and capture a signal from the interrogator at the transponder so as to track the signal. However, with such a configuration, a large number of phase shifters and control circuits to control them are required, making it difficult to realize a compact apparatus, such as an RF-IC card. In this embodiment, such a large increase in size of the apparatus configuration does not occur. The uplink transceiver circuit 16 can be configured from one reciprocal modulator 24 and two element antennas 26 and 28, thus resulting in a compact and low cost apparatus configuration.

Furthermore, according to this embodiment, a transponder resistant to interference waves can be obtained. Namely, when the element antennas 26 and 28 receive an interference wave, a "response" to this interference wave is re-radiated with narrow directivity in the direction of the incoming interference wave. Therefore, the interference wave can be prevented from adversely affecting the operation of the transponder 12 or the interrogator 10. This sort of property, namely, the immunity to interference, is particularly effective when using the ISM (Industrial Scientific Medical) band generally containing many different types of signals.

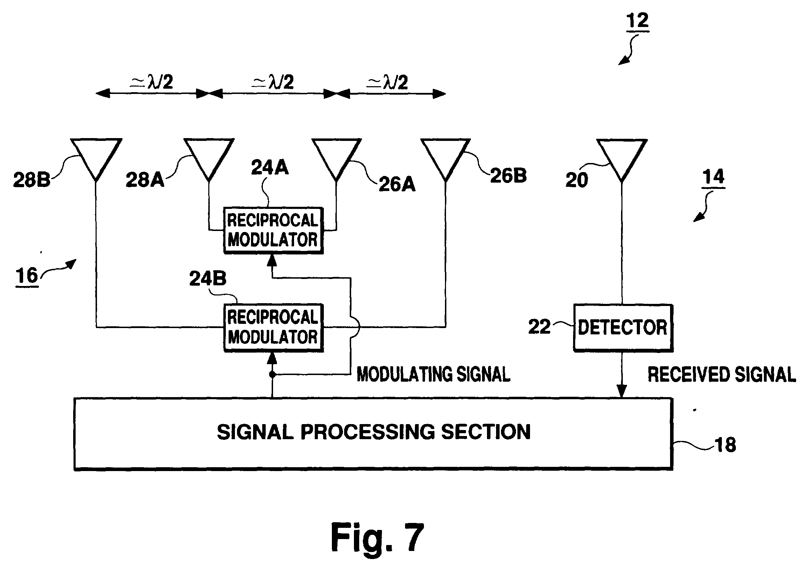

Fig. 7 shows a configuration of an in-vehicle transponder 12 according to a second embodiment of the present invention. In this embodiment, the uplink transceiver circuit 16 comprises a first circuit set, comprising a reciprocal modulator 24A and element antennas 26A and 28A, and a second circuit set, comprising a reciprocal modulator 24B and element antennas 26B and 28B. Each circuit set respectively operates in an identical manner as the reciprocal modulator 24 and the element antennas 26 and 28 in the first embodiment. The element antennas 26A, 26B, 28A, and 28B have a collinear arrangement at an equidistant spacing (such as approximately $\lambda/2$). With such a configuration, in addition to achieving the same effect as the above-described first embodiment, the strength of the signal that is re-radiated increases by 6 dB compared to the first embodiment due to the increased number of element antennas.

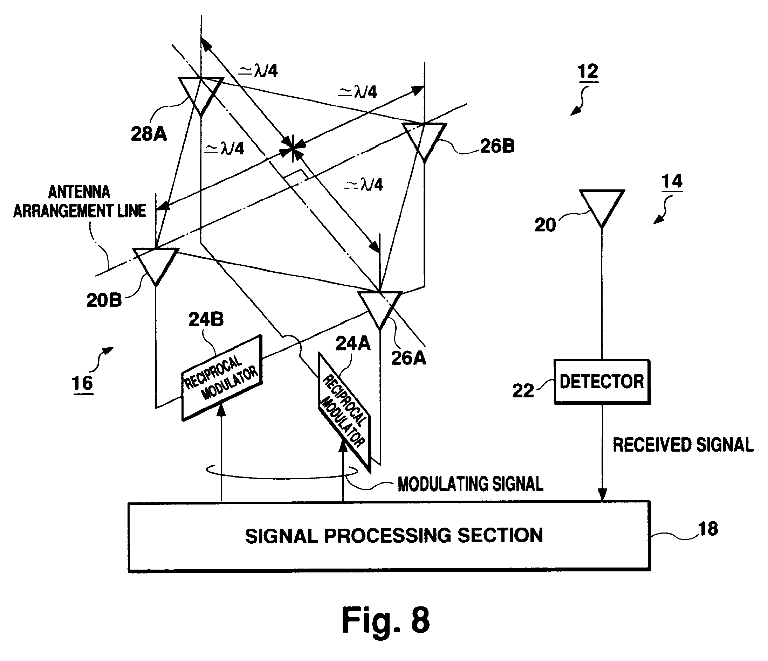

Fig. 8 shows a configuration of an in-vehicle transponder 12 according to a third embodiment of the present invention. In this embodiment as well, two reciprocal modulators are provided as in the second embodiment, and four element antennas for the uplink transceiver circuit 16 are provided. Furthermore, in the device according to this embodiment, the line connecting the element antenna 26A and the element antenna 28A and the line connecting the element antenna 26B and the element antenna 28B are orthogonal to each other. The distance from the intersection of these lines to each element antenna is each approximately λ/4. In this manner, a two-dimensional or coplanar arrangement of the element antennas 26A, 26B, 28A, and 28B yields a broad receiving directivity and high-gain transmitting directivity as well as tolerance to changes in position of the transponder 12 with respect to the interrogator 10. For example, in an ETC for an expressway, it is possible to respond to the acquisition from the interrogator 10 even if a vehicle carrying the transponder 12 is oriented forward at a slight angle or the transponder 12 has been installed at a slight angle.

While there have been described what are at present considered to be preferred embodiments of the present invention, it will be understood that various modifications may be made thereto, and it is intended that the appended claims cover all such modifications as fall within the true spirit and scope of the invention.

An uplink transceiver circuit (16) of an in-vehicle transponder (12) is configured using a modulator (24) having reciprocal characteristics. A continuous wave received by an element antenna (26) is modulated by the reciprocal modulator (24) and re-radiated from an element antenna (28). Conversely, a continuous wave received by the element antenna (28) is modulated by the reciprocal modulator (24) and re-radiated from the element antenna (26). The signals re-radiated from these element antennas (26, 28) are an in-phase combination in the direction of the incoming continuous wave so that the directivity for transmission narrows and the gain increases. For the reception of the continuous wave, a broad receiving directivity, which each element antenna (26, 28) individually provides, can be realized.

**Claims**

1.   An antenna apparatus comprising:

a predetermined number of modulators each having a first terminal and a second terminal;
a predetermined number of first element antennas disposed to correspond with each modulator and connected to the first terminal of corresponding modulators; and
a predetermined number of second element antennas disposed to correspond with each modulator and connected to the second terminal of corresponding modulators;
wherein each modulator is a reciprocal modulator that simultaneously executes with identical phase shifts an operation to modulate a signal input from the first terminal and to output the resulting signal from the second terminal, and an operation to modulate a signal input from the second terminal and to output the resulting signal from the first terminal.

2.   The antenna apparatus according to claim 1 wherein said modulators, first element antennas, and second element antennas are disposed as a plurality of sets, and all first and second element antennas are disposed on a common and predetermined line.

3.   The antenna apparatus according to claim 1 wherein:

said modulators, first element antennas, and second element antennas are disposed as a plurality of sets;
an antenna arrangement line connecting the first and second element antennas forming an arbitrary set is different from the antenna arrangement line of another arbitrary set; and
antenna arrangement lines of the sets belong to the same predetermined plane.

4.   A transponder of a passive type comprising:

a downlink receiver circuit for receiving acquisition that was sent by radio transmission;
an in-vehicle uplink transceiver circuit for receiving a continuous wave that was sent by radio transmission from said interrogator, and performing modulation on and transmitting the continuous wave; and
a signal processing section for supplying a modulating signal for said modulation to said uplink transceiver circuit necessary for responding to the acquisition received from said downlink receiver circuit;
wherein said uplink transceiver circuit does not perform signal amplification and frequency conversion and is the antenna apparatus of any one of claims 1-3.

POSITIONED
APPROXIMATELY $\lambda/2$ APART

12

28

26

24

20

14: RECEIVER CIRCUIT
FOR DOWNLINK

16

RECIPROCAL
MODULATOR

22  DETECTOR

TRANSCEIVER
CIRCUIT FOR UPLINK

MODULATING SIGNAL

RECEIVED SIGNAL

SIGNAL PROCESSING SECTION  18

$\lambda$ : FREE-SPACE WAVELENGTH

## Fig. 1

EP 0 951 090 A2

MODULATED WAVE     CONTINUOUS WAVE

**28**

**26**

**24**

RECIPROCAL MODULATOR

**30**    $\phi_D$

$\phi_D$: PHASE SHIFT IN LINE FROM ELEMENT ANTENNA TO ANOTHER ELEMENT ANTENNA VIA RECIPROCAL MODULATOR

**Fig. 2A**

CONTINUOUS WAVE     MODULATED WAVE

**28**

**26**

**24**

RECIPROCAL MODULATOR

**32**    $\phi_D$

**Fig. 2B**

**28**

**26**

$\phi_D$

**16**    $\phi_D$

RECIPROCAL MODULATOR

**24**

**Fig. 2C**

PHASE SHIFT IN B→C→D

$$\phi_D + d \cdot \sin\theta \cdot \frac{2\pi}{\lambda}$$

PHASE SHIFT IN D→C→B

$$\phi_D + d \cdot \sin\theta \cdot \frac{2\pi}{\lambda}$$

} EQUAL

**Fig. 3**

**Fig. 4**

**Fig. 5**

**10 INTERROGATOR**

INTERROGATOR
DIRECTIVITY = BROAD

TRANSPONDER
- RECEIVING DIRECTIVITY = BROAD
- TRANSMITTING DIRECTIVITY = NARROW

DIRECTION OF MOVEMENT

**12 RF·IC CARD
(TRANSPONDER)**

TRANSACTION COVERAGE

# Fig. 6

EP 0 951 090 A2

Fig. 7

Fig. 8

Fig. 9